# EUROPÄISCHE PATENTSCHRIFT

(11) **EP 0 763 953 B1**
(45) Veröffentlichungstag und Bekanntmachung des Hinweises auf die Patenterteilung: **18.10.2006**
(21) Anmeldenummer: 96113646.2
(22) Anmeldetag: 26.08.1996
(51) Int. Cl.: H04Q 3/545

(54) **Verfahren zum Laden von Software in Kommunikationssystemen mit nichtredundanten, dezentralen Einrichtungen**
Method for charging of software in communication systems with non-redundant, decentralized devices
Procédé pour le chargement de software dans des systèmes de communication équipés de dispositif décentralisés et non-redondants

(30) Priorität: 13.09.1995 DE 19533961
(43) Veröffentlichungstag der Anmeldung: 19.03.1997
(73) Patentinhaber: SIEMENS AKTIENGESELLSCHAFT, 80333 München (DE)
(72) Erfinder: Löbig, Norbert, Dr.rer.nat., 64291 Darmstadt (DE)

(56) Entgegenhaltungen:
- EP-A- 0 598 526
- KRUITHOF M.: "CALL LOAD SHARING" PROCEEDINGS OF THE NATIONAL ELECTRONICS CONFERENCE, Bd. 32, 16. - 18. Oktober 1978, Seiten 86-88, XP002111472

## Beschreibung

Die Erfindung betrifft ein Verfahren gemäß dem Oberbegriff des Patentanspruchs 1.

Die effektive Bearbeitung und Steuerung anstehender Aufgaben wird in zeitgemäßen Kommunikationssystemen durch eine Dezentralisierung von Intelligenzleistung realisiert - siehe auch Kruithof, M.: 'Call Load Sharing', Proceedings of the National Electronics Conference, Bd 32, pp.86-88, Oct 1978. Dies bedeutet, daß Programme, die in früheren programmgesteuerten Systemen in der zentralen Steuereinrichtung abgespeichert waren und dort zum Ablauf gelangt sind, einschließlich der zugehörigen Daten zur Peripherie hin verlagert sind und dort unabhängig von der zentralen Steuereinrichtung bearbeitet werden. Dies hat insbesondere den leistungssteigernden Vorteil, daß die zentrale Steuereinrichtung von der Steuerung peripherer Abläufe entlastet wird. Allerdings muß dann die betreffende periphere Software bei Inbetriebnahme des Kommunikationssystems zu jenen peripheren Einrichtungen hin übertragen und dort abgespeichert werden. Dieses Erfordernis besteht insbesondere bei einem Versionswechsel der Software aus Gründen der Fehlerbehebung oder des Einbringens neuer Leistungsmerkmale, gegebenenfalls ebenso nach einem Ausfall bzw. teilweisen Ausfall des Kommunikationssystems.

Da zeitgemäße Kommunikationssysteme ständig um neue Dienste und Leistungsmerkmale erweitert und somit auch die diese steuernden Programme und Daten häufig aktualisiert werden, kommt dem Wechsel der Software von Kommunikationssystemen eine immer größere Bedeutung zu. An ein Kommunikationssystem werden generell andere Anforderungen hinsichtlich der Systemverfügbarkeit gestellt als an viele andere technische Systeme und Anlagen wie beispsielsweise Datenverarbeitungsanlagen.

Insbesondere muß das Kommunikationssystem im Rahmen seiner Kapazitäten auch während des Einbringens einer neuen Software möglichst jederzeit für alle Teilnehmer verfügbar sein, eine Forderung, die indirekt über die Zuverlässigkeitsforderungen von ITU und BELLCORE an Kommunikationssysteme gestellt wird, aber auch direkt von den Betreibergesellschaften vorgebracht wird. Aus Zuverläsigkeitsgründen sind insbesondere die zentralen Einrichtungen des Kommunikationssystems redundant ausgeprägt. Daher besteht ein Kommunikationssystem in der Regel aus mindestens gedoppelten zentralen Einrichtungen, wie zum Beispiel dem Koppelfeld, den Nachrichtenverteilereinheiten sowie zentralen Steuereinrichtungen. Alle diese Einrichtungen sind Softwaregesteuerte Ein- oder Mehrprozessorsysteme. Bei Inbetriebnahme von Kommunikationssystemen muß die gesamte Systemsoftware sowohl in die zentralen als auch in die peripheren Einrichtungen geladen werden. Das Laden von Software kann aber auch infolge von Fehlerkorrekturen oder der Einbringung neuer Leistungsmerkmale und Dienste in das Kommunikationssystem erforderlich werden. In diesem Fall ist dann im allgemeinen ein Wechsel großer Teile der gesamten Software unumgänglich.

Um dem Erfordernis der Verfügbarkeit des Kommunikationssystems für alle Teilnehmer gerecht zu werden, muß der Wechsel der Software während des laufenden Betriebs erfolgen; dabei müssen dann gegebenenfalls temporäre Verkehrseinschränkungen hingenommen werden, wobei die Nichtverfügbarkeit des Systems für einzelne Teilnehmer oder die Nichterreichbarkeit einzelner Teilnehmer oder Ziele unbedingt vermieden werden muß. Wegen der eingeschränkten Redundanz und der gegebenenfalls unumgänglichen Verkehrseinschränkung ist die für den gesamten Wechsel der Software zur Verfügung stehende Zeit auf wenige Stunden begrenzt, in der Regel wird der Wechsel in Zeiten mit geringer Verkehrslast (zum Beispiel während der Nachtstunden) durchgeführt. Bei ungünstigem Verhältnis von zu ladender Datenmenge und Laderate können aus diesem Grund die peripheren Einrichtungen nicht sukzessive geladen werden, da eine derartige Vorgehensweise unter Umständen mehrere Tage Ladezeit in Anspruch nehmen würde. Um dem Erfordernis des hinreichend schnellen Einbringens der Software gerecht zu werden, wird zum Beispiel jeweils eine Hälfte der peripheren Einrichtungen gleichzeitig geladen;die jeweils andere Hälfte der peripheren Einrichtungen erhält währenddessen den vermitlungstechnischen Betrieb aufrecht. Dies bedeutet in der Praxis eine ca.50-%ige Verkehrseinschränkung, ein für verkehrsarme Zeiten durchaus tolerierbarer Wert. Beim Wechsel der Software der Kommunikationssysteme lädt die zentrale Steuereinrichtung dann jeweils eine Hälfte der peripheren Einrichtungen mit Programminformation (vermittlungstechnische, betriebstechnische und administrative Programme) sowie mit den der Einrichtung zugehörigen Dateninformationen (Anschlußlage, Signalisierung, Berechtigung, Rufnummern und weitere individuelle Charakteristika von Verbindungsleitungen und Teilnehmeranschlüssen sowie Ausbauzustand und Konfiguration der Einrichtung).

Die in die Peripherie zu ladenden Programm- und Datenmengen sind sehr umfangreich und mit dem Trend zu immer leistungsfähigeren Kommunikationssystemen in starkem Wachstum begriffen. Die zu ladenden peripheren Einrichtungen sind dabei über ein gedoppeltes Nachrichtenverteilersystem mit der zentralen Steuereinrichtung verbunden, welche die gesicherte Übertragung der Ladenachrichten wie auch die Verteilung normaler vermittlungs- und betriebstechnischer Nachrichten vornimmt. Die Ladezeiten werden in erster Linie begrenzt durch die Übertragungsrate des Nachrichtenverteilersystems in Richtung Peripherie, ferner aber auch durch die Performance der zentralen Steuereinrichtung zur Bereitstellung der Ladeinformation und die Übertragungsleistung auf der Schnittstelle zwischen zentraler Steuereinrichtung und Nachrichtenverteilersystem. Während des Ladens der peripheren Einrichtungen oder eines Teils der peripheren Einrichtungen sind die an die betreffenden peripheren Einrichtungen angeschlossenen PCM-Strecken vermittlungstechnisch nicht verfügbar. Insbesondere gilt dies für die PCM30-Strecken eines Ortsvermittlungssystems, welche von ETSI/ITU standardisierte V5.2 Schnittstellen zugeordnet sind.

In der deutschen Patentschrift 4 22 805 wird ein Verfahren vorgeschlagen, wie beim Vorhandensein von V5.2 Schnittstellen Software in die nichtredundant ausgebildeten peripheren Einrichtungen eines Kommunikationssystems geladen wird:

Dabei wird zunächst eine Systemhälfte zusammen mit den zugeordneten peripheren Einrichtungen dem vermittlungstechnischen Verkehr entzogen. Bei Vorhandensein von V5.2 Schnittstellen werden nun die V5.2 Kommunikationskanäle auf die redundante Systemhälfte umgeleitet. Im folgenden wird nun die neue Software in die dem vermittlungstechnischen Verkehr entzogene Systemhälfte geladen. Ist der Ladevorgang in diese Systemhälfte abgeschlossen, so geht diese in Betrieb und alle V5.2 Kommunikationskanäle werden nun auf diese Systemhälfte geleitet. Nun kann die neue Software in die verbleibende Systemhälfte geladen werden. Problematisch an einer derartigen Vorgehensweise ist jedoch, daß die hierzu erforderlichen, komplexen Umschalte- und Steuervorgänge im Kommunikationssystem durchgeführt werden müssen. Dies bedingt gegebenfalls einen erhöhten Aufwand.

Der Erfindung liegt die Aufgabe zugrunde, eine einfache, mit geringem Entwicklungsaufwand realisierbare Methode anzugeben, mit der das Einbringen von Software in die nichtredundant ausgeprägten peripheren Einrichtungen eines Kommunikationssystems weiter beschleunigt werden kann und zugleich die Verfügbarkeit des Systems für die daran angeschlossenen Teilnehmer während des Wechsels der Software sichergestellt ist.

Die Erfindung wird, ausgehend vom Oberbegriff des Patentanspruchs 1 durch die Merkmale des kennzeichnenden Teils gelöst.

Vorteilhaft an der Erfindung ist insbesondere, daß die von den Teilnehmeranschlußnetzen ausgehenden Kommunikationskanäle bereits im Vorfeld des Kommunikationssystems unter Verwendung eines System Splits ersatzgeschaltet werden, womit sie der einen Systemhälfte entzogen und der verbleibenden Systemhälfte sowie den dieser zugeordneten peripheren Einrichtungen zugeführt werden. Damit wird das Kommunikationssystem von den beim Stand der Technik geschilderten umfangreichen Steuervorgängen entlastet. Die benötigten Programme und Daten können nun in die eine Systemhälfte sowie in die zugeordneten peripheren Einrichtungen geladen werden. Im folgenden wird dann die verbleibende Systemhälfte abgeschaltet, und die Kommunikationskanäle werden auf die bereits mit der neuen Software geladenen Systemhälfte umgeleitet. Nun können Programme und Daten in diese Systemhälfte sowie den zugeordneten peripheren Einrichtungen geladen werden.Abschließend wird der redundante Betrieb wiederhergestellt. Mit dieser Vorgehensweise können periphere Einrichtungen mit Software in effizienter Weise geladen werden, ohne dabei die Verfügbarkeit des Kommunikationssystems für die angeschlossenen Teilnehmer einschließlich der V5.2-Teilnehmer zu beeinträchtigen.

Weitere Ausgestaltungen der Erfindung sind in den Unteransprüchen angegeben:

Gemäß Anspruch 2 ist vorgesehen, daß das Herstellen des definierten Anfangszustandes der zuerst zu ladenden Systemhälfte und der ihr zugeordneten peripheren Einrichtungen durch Ausdünnen des von den dieser Systemhälfte zugeordneten peripheren Einrichtungen zu bearbeitenden vermittlungstechnischen Verkehrs erfolgt, indem bestehende Verbindungen für die Dauer ihres Bestehens bearbeitet werden, während neue Verbindungswünsche abgewiesen werden, bis der durch ein bestimmtes Kriterium definierte Anfangszustand erreicht ist. Damit ist der Vorteil verbunden, daß ein darauffolgendes Auslösen der dann noch bestehenden Restverbindungen lediglich den Abbruch weniger Verbindungen bewirkt, womit i. a. ein Retten eines großen Teils aller stabilen Verbindungen im Rahmen des Wechsels der Software des Kommunikationssystems erreicht werden kann. Neue Verbindungswünsche werden während dieser Ausdünnungsphase nur von den der weiteren Systemhälfte zugeordneten peripheren Einrichtungen bearbeitet, so daß die vermittlungstechnische Verfügbarkeit des Kommunikationssystems für alle Teilnehmer und alle Richtungen der Fernvermittlungsebene gewährleistet ist, allerdings mit gewissen, durch die verminderte Anzahl der zur Verfügung stehenden Sprachkanäle bedingten Verkehrseinschränkungen.

Gemäß Anspruch 3 ist vorgesehen, daß das bestimmte Kriterium das Erreichen einer vorgegebenen Zeitmarke oder gegebenenfalls eines Schwellenwertes ist. Damit ist der Vorteil verbunden, daß das Ende des Ausdünnungsprozesses durch zwei unabhängige Kriterien vorgebbar ist, welche den Grund des Rettens stabiler Verbindungen definieren.

Gemäß Anspruch 4 ist vorgesehen, daß der definierte Anfangszustand der den zuletzt zu ladenden Systemhälfte und der ihr zugeordneten peripheren Einrichtungen hergestellt wird, indem über diese Systemhälfte geleitete Verbindungen ohne vorheriges Ausdünnen des vermittlungstechnischen Verkehrs ausgelöst werden. Damit ist der Vorteil einer weiteren Beschleunigung des Verfahrens verbunden.

Gemäß Anspruch 5 ist vorgesehen, daß vor dem zur Erreichung des definierten Anfangszustands der zuletzt zu ladenden Systemhälfte und der ihr zugeordneten peripheren Einrichtungen vorgenommenen Auslösen der über diese Systemhälfte geführten Verbindungen die über die dieser Systemhälfte zugeordneten peripheren Einrichtungen geführten Kommunikationskanäle unterbrochen werden und daß die weitere Systemhälfte die Kommunikationskanäle nach Ersatzschalteanforderung seitens der Teilnehmeranschlußnetze auf die ihr zugeordneten peripheren Einrichtungen ersatzschaltet und die von dem Auslösen betroffenen Teilnehmer in den Teilnehmeranschlußnetzen in ihren Anfangszustand überführt. Damit ist der Vorteil verbunden, daß ausgelöste stabile Verbindungen von den betroffenen Teilnehmern sofort wieder aufgebaut werden können.

Gemäß Anspruch 6 ist vorgesehen, daß das Überführen der zuerst zu ladenden Systemhälfte und der ihr zugeordneten peripheren Einrichtungen in den bezüglich der Teilnehmeranschlußnetze vermittlungstechnisch aktiven Betriebszustand per Bedienereingabe möglich ist. Damit ist der Vorteil verbunden, daß, falls nach Abschaltung der Kommunikationskanäle der über die peripheren Einrichtungen der zuletzt mit der neuen Software zu ladenden Systemhälfte die Ersatzschalteanforderungen für die Nutzdaten führenden Kommunikationskanäle von den Teilnehmeranschlußnetzen mit erheblichem Zeitverzug eintreffen, eine weitere Beschleunigung des Verfahrens erreicht werden kann.

Gemäß Anspruch 7 ist vorgesehen, daß zum Wiederherstellen des redundanten Betriebes die zentralen Einrichtungen der zuletzt geladenen Systemhälfte abgeschaltet und durch die Steuerung der weiteren Systemhälfte wiederangeschaltet werden. Damit ist der Vorteil verbunden, daß sich die Überführung dieser zentralen Einrichtungen in den redundanten Betriebsmodus mit den bereits verfügbaren, für die Wiederinbetriebnahme nach Ausfall entwickelten Steuerungsabläufen durchführen läßt.

Gemäß Anspruch 8 ist vorgesehen, daß die Ersatzschaltung der Nutzdaten führenden Kommunikationskanäle der definierten Schnittstellen zu Teilnehmeranschlußnetzen, insbesondere der V5.2-Schnittstellen, auf die mit der neuen Software geladenen peripheren Einrichtungen und die Zuordnung der für die Bearbeitung der Nr.7 Signalisierung vorgesehenen Einrichtungen möglichst zeitgleich erfolgt. Damit ist der Vorteil verbunden, daß die Teilnehmer an den Teilnehmeranschlußnetzen jederzeit Ferngespräche führen können und aus der Fernebene stets erreichbar sind.

Gemäß Anspruch 9 ist vorgesehen, daß die Ersatzschaltung der Nutzdaten führenden Komunikationskanäle von der jeweils einen Systemhälfte zu der jeweils verbleibenden Systemhälfte durch wenigstens eine vorgeschaltete Cross-Connect Schaltvorrichtung erfolgt. Damit ist der Vorteil der Ausnutzung von unter Umständen sowieso vorhandenen vorgelagerten Einrichtungen des Kommunikationssystems verbunden, was zur weiteren Reduktion des Zeitbedarfs führt, da sich eine Ersatzschaltung der Kommunikationskanäle auf Anforderung der Teilnehmeranschlußnetze oder des Bedieners hin erübrigt.

Gemäß Anspruch 10 ist vorgesehen, daß die Zuordnung von Kommunikationskanal zu peripherer Einrichtung sowie von peripherer Einrichtung zur Systemhälfte derart erfolgt, daß bei Ausfall aller der einen oder der verbleibenden Systemhälfte zugeordneten peripheren Einrichtungen alle hiervon betroffenen Nutzdaten führenden Kommunikationskanäle auf die verbleibenden peripheren Einrichtungen ersatzgeschaltet werden. Damit ist der Vorteil verbunden, daß kein temporärer Totalausfall von Teilnehmern an V5.2-Schnittstellen hinsichtlich vermittelter oder paketorientierter Dienste oder der Schnittstelle selbst erfolgt.

Gemäß Anspruch 11 ist vorgesehen, daß jede der definierten Schnittstellen, insbesondere der V5.2-Schnittstellen, der Teilnehmeranschlußnetze eine ungefähr gleiche Anzahl von Sprachkanälen an die beiden Gesamtheiten der den Systemhälften zugeordneten peripheren Einrichtungen heranführt. Damit ist der Vorteil verbunden, daß während des Einbringens der neuen Software eine maximale Verkehrseinschränkung von ca. 50 % garantiert werden kann.

Die Erfindung wird im folgenden anhand eines Ausführungsbeispiels näher erläutert.

Es zeigen:
- Fig.1: die typische Systemarchitektur eines Vermittlungssystems mit ungedoppelten peripheren Einrichtungen,
- Fig.2: die Struktur des Teilnehmeranschlußnetzes (Access Network) mit V5.2-Schnittstelle,
- Fig.3: das Beispiel einer V5.2-Schnittstelle an einer Ortsvermittlungsstelle mit ungedoppelten peripheren Einrichtungen mit jeweils vier PCM30-Systemen,
- Fig.4: die Vorrichtung, auf der das erfindungsgemäße Verfahren zum Ablauf gelangt.

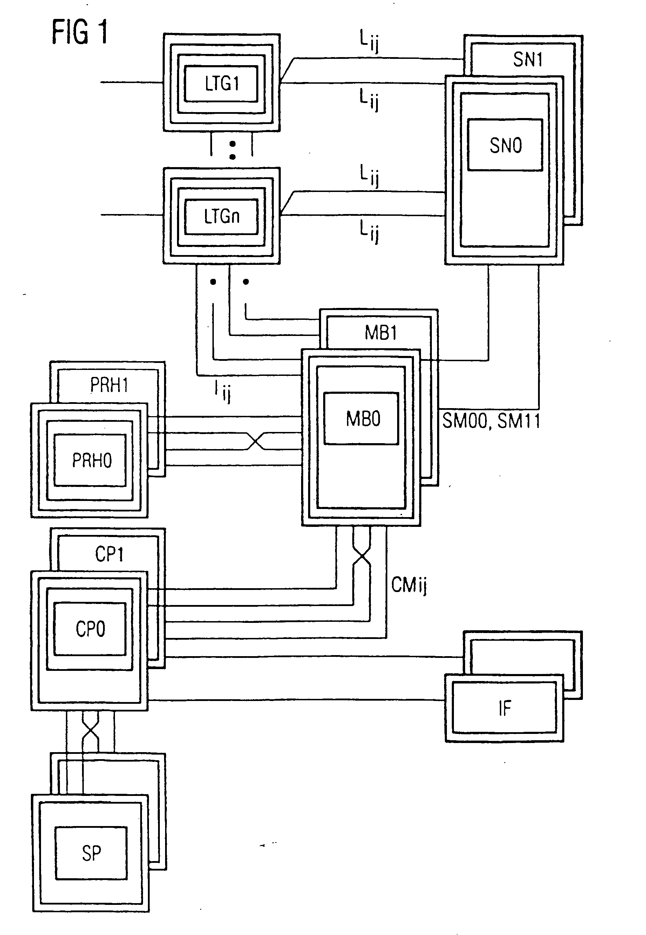

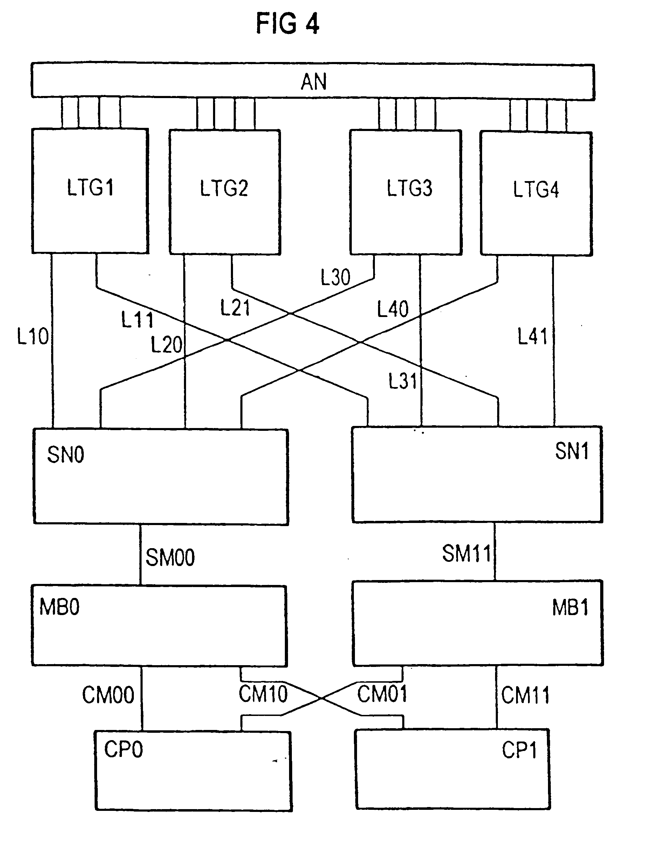

Fig. 1 zeigt die typische Systemarchitektur eines Kommunikationssystems mit ungedoppelten peripheren Einrichtungen LTG₁. ..LTGₙ. Sie sind ausgangsseitig mit Teilnehmern bzw. weiteren Kommunikationssystemen verbunden; die von den beiden letzten ausgehenden Informationen werden von den peripheren Einrichtungen LTG₁..LTGₙ empfangen und über Verbindungen Lij dem redundant ausgebildeten Koppelfeld SN0, SN1 zugeführt. Weiterhin sind die peripheren Einrichtungen LTG₁...LTGₙ über weitere Verbindungen Iij mit den redundant ausgebildeten Nachrichtenverteilereinheiten MB0, MB1 verbunden, die ihrerseits über weitere Verbindungen Iij zum einen mit den redundant ausgebildeten Einrichtungen zur Behandlung zentraler Protokollabschlußaufgaben PRH (z.B. zentraler Zeichenkanal für No.7 Signalisierung, Zugang zu Paketnetzen) und zum anderen mit dem Koppelfeld SNO,SN1 sowie mit der ebenfalls redundant ausgebildeten zentralen Steuereinrichtung CP0, CP1 verbunden sind. Letztere ist an einen gedoppelten Massenspeicher SP angeschlossen. Im weiteren sind an die zentrale Steuereinrichtung CP0, CP1 Interface-Einheiten IF zur Anschaltung von Bedienungselementen bzw. zur Alarmierung vorgesehen. Das Koppelfeld SN0, SN1, die Nachrichtenverteilereinheiten MB0, MB1, die Einrichtungen zur Behandlung zentraler Protokollabschlußaufgaben PRH0, PRH1, die zentrale Steuereinrichtung CP0, CP1 sowie die Massenspeicher SP und die Interface-Einheiten IF sind somit im Kommunikationssystem jeweils gedoppelt vorgesehen. Die peripheren Einrichtungen LTG₁...LTGₙ hingegen sind bei vorliegendem Ausführungsbeispiel ungedoppelt. Weiterhin ist die Koppelfeldhälfte SN0 über Verbindungen SM00 mit der Nachrichtenverteilereinheit MB0 in gleicher Weise verbunden wie die Koppelfeldhälfte SN1 über Verbindungen SM11 mit der Nachrichtenverteilereinheit MB1. Die Nachrichtenverteilereinheiten MB0, MB1 sind ihrerseits, wie in Fig. 4 aufgezeigt,mit der zentralen Steuereinrichtung CP0, CP1 über Verbindungen CM00 und CM11 verbunden. Gleichzeitig besteht eine Auskreuzung zwischen den Nachrichtenverteilereinheiten MB0, MB1 sowie der zentralen Steuereinrichtung CP0, CP1 über Verbindungen CM10, CM01.

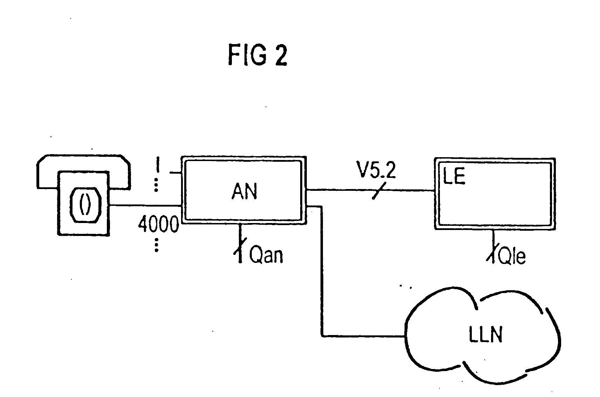

Fig. 2 zeigt eine typische Konfiguration, in der ein Teilnehmeranschlußnetz (Access Network) AN an eine Kommunikationssystem mit Ortsvermittlungsstellen-Funktion (Local Exchange) LE angeschaltet ist. Das Access Network AN weist dabei eine Konzentrationsfunktion auf; bei einer Teilnehmerkonzentration von 8:1 können beispielsweise bis zu 4000 Teilnehmer an eine V5.2-Schnittstelle eines Access Network AN mit 16 PCM30-Systemen angeschlossen werden. Weiterhin kann das Access Network AN Zugang zu einem Leased Line Network LLN haben und über eine oder mehrere V5.2-Schnittstellen an Kommunikationssysteme mit Ortsvermittlungsstellen-Funktion LE angeschlossen sein. Das Kommunikationssystem LE weist eine Schnittstelle Qle sowie das Access Network AN eine Schnittstelle Qan auf. Die Administrierung der V5.2-Schnittstelle und der zugehörigen Teilnehmer erfolgt über die Schnittstellen Qan, Qle funktional getrennt über das Access Network AN sowie das Kommunikationssystem LE; die Administrierung erfolgt hierbei nicht (logisch) über die V5.2-Schnittstelle selbst hinweg. Jede V5.2-Schnittstelle bietet Zugang zum Kommunikationssystem LE über 1 bis 16 PCM30-Verbindungen. Dabei können je PCM30-Verbindung maximal drei physikalische Kommunikationskanäle CC eingerichtet werden, und zwar in Time Slot 15, 16, 31. Ein nicht als Kommunikationskanal CC genutzter Time Slot ist als Bearer Channel verfügbar, insbesondere gilt dies für Time Slot 16.

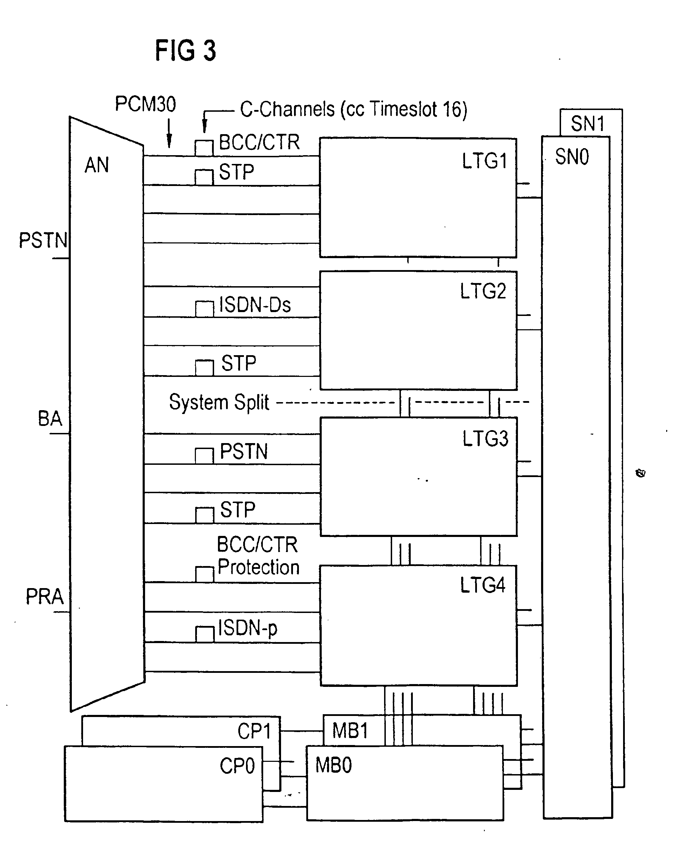

In Fig.3 sind diese Verhältnisse beispielhaft im Kommunikationssystem LE mit ungedoppelten peripheren Einrichtungen LTG₁. ..LTG₄ zu jeweils vier PCM30-Systemen detailliert aufgezeigt. Dabei sind an das Access Network AN analoge Teilnehmer und Nebenstellen (PSTN-Teilnehmer) sowie digitale Teilnehmer und Nebenstellen (Basic Access BA, Primary Rate Access PRA) angeschlossen. Das Access Network AN ist über jeweils vier PCM30-Systeme an die peripheren Anschlußeinrichtungen LTG₁...LTG₄ angeschlossen. Weiterhin bestehen Verbindungen der peripheren Anschlußeinrichtungen LTG₁..LTG₄ zum Koppelfeld SN0, SN1 sowie den Nachrichtenverteilereinheiten MB0, MB1. Das vermittlungstechnische und betriebstechnische Zusammenwirken der einzelnen Einrichtungen wird von der Steuereinrichtung CP0, CP1 bestimmt. Im Zeitschlitz 16 bestimmter PCM30-Systeme werden die V5.2-spezifischen Protokolle übertragen. Dabei sind beispielsweise zugeordnet:
- BCC/CTR: C-Channel mit BCC, Control und Protection Protokoll
- BCC/CTR Protection: C-Channel mit Protection Protokoll
- PSTN: C-Channel mit PSTN Protokoll
- ISDN-P: C-Channel mit ISDN D-Kanal Paketdaten
- ISDN-DS: C-Channel mit ISDN Signalisierungsdaten
- STB: Stand-By C-Channel der Protection Group 2.

Im folgenden wird der Ablauf des erfindungsgemäßen Verfahrens detailliert beschrieben. Fig. 4 zeigt die Verhältnisse einer Konfiguration nach Fig. 3 als Ausgangszustand vor einem Software-Wechsel. Darin ist lediglich ein Access Network AN aufgezeigt, das über eine V5.2-Schnittstelle an die peripheren Einrichtungen LTG₁...LTG₄ herangeführt ist. Generell kann aber eine Mehrzahl von Access Networks AN₁...ANₖ angeschlossen werden. Beispielhaft werden pro peripherer Einrichtung LTG₁...LTG₄ jeweils vier PCM30-Systeme (siehe auch Fig. 3) für den Anschluß einer V5.2-Schnittstelle mit insgesamt 16 PCM30-Strecken verwendet. Weiterhin sind ein Koppelfeld SN0, SN1, Nachrichtenverteilereinheiten MB0, MB1 sowie eine zentrale Steuereinrichtung CP0, CP1 als zentrale Einrichtungen des Kommunikationssystems aufgezeigt, wobei alle letztgenannten Einrichtungen aus Sicherheitsgründen gedoppelt sind. Die periphere Einrichtung LTG₃ terminiert das den aktiven BCC/CTR C-Channel der V5.2-Schnittstelle heranführende PCM30-System (Primary Link), weshalb ihr über die Datenbasis die Funktion des V5.2-Masters zugewiesen ist. Dies bedeutet, daß sie alle aktuellen Zustände der V5.2-Schnittstelle führt.

Insbesondere sind hier die Belegungen der Sprachkanäle abgelegt. Die Zuordnung der Access Network Teilnehmer zu den Sprachkanälen der V5.2-Schnittstelle wird hier ebenfalls durchgeführt. Die periphere Einrichtung LTG₂ terminiert das den Stand-by BCC/CTR C-Channel der V5.2-Schnittstelle heranführende PCM30-System (Secondary Link), weshalb hier aus Ausfallgründen alle Daten der Master-Funktion in hinreichender Redundanz gehalten werden. Im Falle eines Verbindungsaufbaus, ausgehend von einem Teilnehmer der V5.2- Schnittstelle wird die Signalisierungsinformation des Teilnehmers in einem fest zugeordneten Kommunikationskanal CC einer der peripheren Einrichtungen LTG₁...LTG₄ übertragen. Dies kann zum Beispiel die periphere Einrichtung LTG₁ sein. Sie ist dann - bedingt durch den Anschluß dieses Teilnehmers - für die Signalisierung des Teilnehmers verantwortlich. Die periphere Einrichtung mit Masterfunktion LTG₃ nimmt nun auf Basis einer Verbindung eine Zuordnung der für die Signalisierung verantwortlichen peripheren Einrichtung LTG₁ zu einer mit der Durchführung von Vermittlungsaufgaben betrauten peripheren Einrichtung vor. Letztere kann zum Beispiel die periphere Einrichtung LTG₄ sein. Sie ist dann für den einmaligen Auf- bzw. Abbau dieser einen Verbindung verantwortlich.

Gemäß Fig. 4 ist die periphere Einrichtung LTG₁ über Verbindungen L10 mit der Koppelfeldhälfte SN0 sowie über Verbindungen L11 an die Koppelfeldhälfte SN1 angeschlossen. Die periphere Einrichtung LTG₂ ist über Verbindungen L20 mit der Koppelfeldhälfte SN0 sowie über Verbindungen L21 an die Koppelfeldhälfte SN1 angeschlossen. Das Koppelfeld SN0, die Nachrichtenverteilereinheit MB0 sowie die zentrale Steuereinrichtung CP0 definieren im folgenden die Systemhälfte 0, der, wie soeben aufgezeigt - zum Zwecke des Wechsels der Software die peripheren Einrichtungen LTG₁, LTG₂ zugeordnet sind.

In gleicher Weise sind die peripheren Einrichtungen LTG₃, LTG₄ an die zentralen Einrichtungen angeschlossen. Erstere ist über Verbindungsleitungen L30,L31 an die Koppelfeldhälfte SN0 bzw. die redundant ausgelegte Koppelfeldhälfte SN1 herangeführt. Die periphere Einrichtung LTG₄ ist über Verbindungen L40, L41 an die Koppelfeldhälfte SN0 bzw. die redundant ausgelegte Koppelfeldhälfte SN1 angeschlossen. Die Koppelfeldhälfte SN1, die Nachrichtenverteilereinheit MB1 sowie die zentrale Steuereinrichtung CP1 definieren im folgenden die Systemhälfte 1, der - wie ebenfalls aufgezeigt - zum Zwecke des Wechsels der Software die peripheren Einrichtungen LTG₃, LTG₄ zugeordnet sind. Weiterhin ist die Koppelfeldhälfte SN0 über Verbindungen SM00 mit der Nachrichtenverteilereinheit MB0 in gleicher Weise verbunden wie die Koppelfeldhälfte SN1 über Verbindungen SM11 mit der Nachrichtenverteilereinheit MB1. Die Nachrichtenverteilereinheiten MB0, MB1 sind ihrerseits wie in Fig. 4 aufgezeigt mit der zentralen Steuereinrichtung CP0, CP1 über Verbindungen CM00 und CM11 verbunden. Gleichzeitig besteht eine Auskreuzung zwischen den Nachrichtenverteilereinheiten MB0, MB1 sowie der zentralen Steuereinrichtung CP0, CP1 über Verbindungen CM10, CM01.

Fig.4 zeigt eine Konfiguration, wie sie sich unmittelbar vor dem Software-Wechsel darstellt. In diesem Fall werden ca. 50 % des Verkehrs sowie bei gleichmäßiger Verteilung der Signalisierung auf die peripheren Einrichtungen LTG₁...LTG₄ ca. 50 % der Signalisierung über die Peripheriehälfte 0 abgewickelt. Ebenso werden ca. 50 % des Verkehrs sowie ca. 50 % der Signalisierung über die Peripheriehälfte 1 abgewickelt. Vor dem Wechsel der Software herrscht der redundante Normalbetriebsmodus des Kommunikationssystems, das heißt i.a. werden beide Koppelfeldhälften SN0, SN1 für jede Verbindung durchgeschaltet sein, die Einrichtungen MB0, MB1, PRH0, PRH1 sowie CP0 und CP1 arbeiten in ihrem redundanten Betrieb, zum Beispiel aktiv/stand-by oder load sharing.

Es soll davon ausgegangen werden, daß zunächst die Systemhälfte 0 und die ihr zugeordneten peripheren Einrichtungen, also die peripheren Einrichtungen LTG₁, LTG₂, mit einer neuen Software geladen werden sollen. Diese kann aus Programmen und Daten bestehen. In diesem Fall wird zunächst im redundanten Normalbetriebsmodus der über die peripheren Einrichtungen LTG₁, LTG₂ geführte Verkehr ausgedünnt. Dies bedeutet, daß bestehende Verbindungen noch zugelassen, bearbeitet und gegebenenfalls abgebaut werden, neue Verbindungen aber über diese Peripheriehälfte nicht mehr aufgebaut werden. Nach einer gewissen Zeit wird dann über die Peripheriehälfte 0 nur noch ein geringer Teil des Gesamtverkehrs abgewickelt, zum Beispiel 3 % des Verkehrs. Die Peripheriehälfte 1 stellt weiterhin ca. 50 % der Verkehrskapazität des normalen Betriebszustandes zur Verfügung. Die Wartezeit zur Verkehrsausdünnung kann gegebenenfalls vorab eingestellt werden. Eine weitere Ausgestaltung der Erfindung besteht darin, einen ebenfalls vorab definierten Schwellenwert zu verwenden. Ist dieser erreicht, gilt damit der 'Ausdünnungsprozeß' ebenfalls als abgeschlossen, womit in beiden Fällen dann ein definierter Anfangszustand hergestellt ist. In einer weiteren Ausgestaltung der Erfindung kann der Ausdünnungsprozeß zur Beschleunigung des Verfahrens zum Wechsel der Software unterbleiben.

Im folgenden werden die über die Peripheriehälfte 0 geleiteten, Nutzdaten führenden Kommunikationskanäle CC auf die für Ersatzschaltung zur Verfügung stehenden Kommunikationskanäle der Peripheriehälfte 1 umgeschaltet. Die Umschaltung wird von der zentralen Steuereinrichtung CP gesteuert und geht mit über die angeschlossene V5.2-Schnittstelle abzuwickelnden Ersatzschalteaufträgen an das Teilnehmeranschlußnetz einher. Der noch von der Peripheriehälfte 0 abgewickelte vermittlungstechnische Restverkehr wird ausgelöst. Die peripheren Einrichtungen der Systemseite 0 werden in der Weise außer Betrieb geschaltet, daß die PCM-Signale auf der V5.2-Schnittstelle ungestört generiert werden, die Kommunikationskanäle (CC) jedoch ausfallen. Demzufolge wird kein vermittlungstechnischer Verkehr über die Peripheriehälfte 0 mehr abgewickelt. Der ungestörte Fortbestand der PCM-Signale während des Einbringens der neuen Software in das Vermittlungssystem garantiert gemäß ETSI Standards (V5.2-Schnittstelle und Q3-Standards der V5-Schnittstellen), daß das Teilnehmeranschlußnetz keinen Restart der V5.2-Schnittstelle anstößt, womit ein temporärer Totalausfall der gesamten V5.2-Schnittstelle verbunden wäre. Die peripheren Einrichtungen LTG₁, LTG₂ weisen nun einen vermittlungstechnisch inaktiven Zustand auf. Ferner ist die alte Software noch in den Speichern der peripheren Einrichtungen LTG₁, LTG₂ geladen.

In diesem Konfigurationszustand kann neue Software in die peripheren Einrichtungen LTG₁, LTG₂ geladen werden. Zu diesem Zweck ist die zentrale Steuereinrichtung CP0 der Systemhälfte 0 an ein Speichermedium SP, das als Diskettenlaufwerk ausgestaltet sein kann, angeschlossen. Wahlweise können auch andere Speichermedien verwendet werden. Die zu ladende Software wird dem Diskettenlaufwerk D entnommen und der zentralen Steuereinrichtung CP0 zugeführt. Von dort erfolgt die Übertragung über die Verbindungen CM00, SM00 in die Speicher der peripheren Einrichtungen LTG₁, LTG₂. Während des Ladens der Software in die Systemhälfte 0 wird der vermittlungstechnische Verkehr mit ca. 50 % der Verkehrskapazität des normalen Betriebszustandes durch die Systemseite 1 und die ihr zugeordneten peripheren Einrichtungen LTG₃, LTG₄ aufrecht erhalten. Dies erfolgt allerdings unter Verwendung der alten Software, die noch in den Speichern der peripheren Einrichtungen LTG₃, LTG₄ vorhanden ist. Zu einer vermittlungstechnischen Nichtverfügbarkeit von über die V5.2-Schnittstelle angeschlossenen Teilnehmern des Teilnehmeranschlußnetzes kommt es jedoch nicht. Vor bzw. im Rahmen des Ladens der peripheren Einrichtungen LTG₁, LTG₂ können die ladbaren Softwareanteile der zentralen Einrichtungen SN0, MB0 und insbesondere CP0 vorteilhaft ebenfalls mit einem neuen zugehörigen Softwarestand geladen werden.

Nachdem die neue Software in die Speicher der peripheren Einrichtungen LTG₁, LTG₂ geladen ist, werden die über diese peripheren Einrichtungen geführten Kommunikationskanäle CC wieder in Betrieb genommen. Diese Kommunikationskanäle werden jedoch in den Stand-by-Zustand gebracht, so daß sie weiterhin keine Nutzdaten führen, jedoch für Ersatzschaltezwecke zur Verfügung stehen. Ferner wird das Protection Protokoll aufgebaut, so daß die Systemhälfte 0 in der Lage ist, C-Kanalersatzschaltungen des Teilnehmeranschlußnetzes zu steuern und Anforderungen des Teilnehmeranschlußnetzes für C-Kanalersatzschaltungen zu bearbeiten. Damit steht die Systemhälfte 0 prinzipiell für vermittlungstechnischen Verkehr wieder voll zur Verfügung, sie bearbeitet jedoch noch keine Verbindungswünsche, deren Ursprung oder Ziel Teilnehmer der V5.2-Schnittstelle sind. In diesem Konfigurationszustand wird nun die Systemhälfte 1 dem vermittlungstechnischen Verkehr entzogen. Die peripheren Einrichtungen der Systemseite 1 werden in der Weise außer Betrieb geschaltet, daß die PCM-Signale auf der V5.2-Schnittstelle ungestört generiert werden, die Kommunikationskanäle (CC) jedoch ausfallen. Die über die Systemhälfte 1 geführten bestehenden Verbindungen werden ohne vorheriges Ausdünnen ausgelöst. Durch den Ausfall der Nutzdaten führenden Kommunikationskanäle fordert das Teilnehmeranschlußnetz C-Kanalersatzschaltungen von der zur Übernahme des Vermittlungsbetriebs bereitstehenden Systemhälfte 0. Diese führt die Ersatzschaltung aller Nutzdaten führenden Kommunikationskanäle auf LTG₁, LTG₂ durch und startet den Vermittlungsverkehr für die Teilnehmer an der V5.2-Schnittstelle in der Systemhälfte 0.

Durch den Ausfall der über die Systemhälfte 1 geleiteten Kommunikationskanäle gelten die über die Systemseite 1 geführten Verbindungen für das Teilnehmeranschlußnetz AN als noch existent. Lediglich die Durchschaltung der Sprachinformation wurde unterbrochen. Aus diesem Grund kann ein Teilnehmer, dessen Verbindung ausgelöst wurde, nicht mit Erfolg einen erneuten Wählversuch starten. Die im Teilnehmeranschlußnetz vorhandenen Zuordnungen der Sprachkanäle zu derartigen Teilnehmern werden daher in der Systemhälfte 0 ermittelt und durch Steueraufträge an das Teilnehmeranschlußnetz beseitigt, damit ein solcher Teilnehmer - über die Systemhälfte 0 - erneut einen erfolgreichen Verbindungsaufbau starten kann.

In diesem Konfigurationszustand kann neue Software in die peripheren Einrichtungen LTG₃, LTG₄ geladen werden. Zu diesem Zweck ist die zentrale Seuereinrichtung CP1 der Systemhälfte 1 an das Speichermedium SP, das ebenfalls als Diskettenlaufwerk D ausgestaltet sein kann angeschlossen. Wahlweise können auch hier andere Speichermedien verwendet werden. Die zu ladende Software wird dem Diskettenlaufwerk D entnommen und der zentralen Steuereinrichtung CP1 zugeführt. Von dort erfolgt die Übertragung der Software über die Verbindungen CM11, SM11 in die Speicher der peripheren Einrichtungen LTG₃, LTG₄. Während des Ladens der Software in die Systemhälfte 1 wird der vermittlungstechnische Verkehr mit ca. 50 % der Verkehrskapazität des normalen Betriebszustandes über die Systemhälfte 0 aufrechterhalten. Dies erfolgt bereits mit der neuen Software, die schon in Systemhälfte 0 und insbesondere in die Speicher der peripheren Einrichtungen LTG₁, LTG₂ geladen ist. Zu einer vermittlungstechnischen Nichtverfügbarkeit von über die V5.2-Schnittstelle angeschlossenen Teilnehmern des Teilnehmeranschlußnetzes kommt es jedoch nicht. Vor bzw. im Rahmen des Ladens der peripheren Einrichtungen LTG₃, LTG₄ können die ladbaren Softwareanteile der zentralen Einrichtungen SN1, MB1 und insbesondere CP1 vorteilhaft ebenfalls mit einem neuen Softwarestand geladen werden.

Im folgenden werden nun die zentralen, unter Umständen ebenfalls mit neuer Software versorgten zentralen Einrichtungen SN1, MB1, CP1 abgeschaltet und die peripheren Einrichtungen LTG₃, LTG₄ der Systemseite 0 ohne erneutes Laden des neuen Softwarestandes zugeschaltet. Hiermit bietet die Systemseite 0 mit der vollen Peripheriegesamtheit LTG₁...LTG₄ vermittlungstechnischen Verkehr über die V5.2-Schnittstelle an. Sodann kann, sofern erwünscht, die ursprüngliche oder einem Default entsprechende Verteilung der Nutzdaten führenden Kommunikationskanäle auf die Gesamtheit der physikalisch zur Verfügung stehenden Kommunikationskanäle erfolgen. Damit steht die gesamte Systemperipherie dem vermittlungstechnischen Verkehr wieder voll zur Verfügung. Abschließend wird der redundante Betrieb durch Zuschalten der zentralen Komponenten SN1, MB1, und CP1 unter Steuerung des CP0 wieder hergestellt. Das Ende des Wechsels der Software ist erreicht, die normale Betriebssituation ist wieder hergestellt.

In einer Ausgestaltung der Erfindung wird vorgesehen, daß das Überführen der zuerst geladenden peripheren Einrichtungen LTG₁, LTG₂ zusammen mit den zentralen Einrichtungen der Systemhälfte 0 in einen bezüglich der V5.2-Schnittstelle aktiven Betriebszustand per Bedienereingabe möglich ist. Eine derartige Vorgehensweise ist insbesondere dann vorteilhaft, wenn die vom Teilnehmeranschlußnetz erwartete Ersatzschalteanforderung für die Nutzdaten führenden Kommunikationskanäle nicht oder mit erheblicher Zeitverzögerung generiert wird.

In einer weiteren Ausgestaltung der Erfindung wird vorgesehen, daß die V5.2-Schnittstelle zusammen mit den Einrichtungen für die Bearbeitung der Nr.7 Signalisierung zeitgleich der mit der neuen Software arbeitenden Systemseite 0 zugeordnet werden.

Weiterhin können die Komunikationskanäle CC von der Systemhälfte 0 zu der Systemhälfte 1 und in umgekehrter Richtung durch eine vorgeschaltete Cross-Connect Schaltvorrichtung auf Basis von 64 kBit/s Kanälen geschaltet werden, womit sich C-Kanalersatzschaltungen des Teilnehmeranschlußnetzes erübrigen.

## Patentansprüche

1. Verfahren zum Laden von Software in ein Kommunikationssystem mit wenigstens zwei Paaren von zentralen, einander zugeordneten, redundant ausgebildeten Einrichtungen (CP0, CP1; MB0, MB1; SN0, SN1), die jeweils eine Systemhälfte (SN0, MB0, CP0) sowie die dazu redundant ausgebildete Systemhälfte (SN1, MB1, CP1) definieren,
mit einer Mehrzahl (n) von der einen oder der verbleibenden Systemhälfte zugeordneten peripheren Einrichtungen (LTG₁.... LTGₙ), die mit jeder der zentralen, redundant ausgebildeten Einrichtungen (SN0, SN1; MB0, MB1) verbunden sind und die über definierte Schnittstellen, insbesondere V5.2-Schnittstellen, an Teilnehmeranschlußnetze (AN₁...ANₖ) angeschlossen sind,
mit einer weiteren Mehrzahl von diesen Schnittstellen zugehörigen Kommunikationskanälen (CC), die zwischen den Teilnehmeranschlußnetzen (AN₁...ANₖ) und jeweils zugeordneten peripheren Einrichtungen (LTG₁..LTGₙ) der ersten oder zweiten Systemhälfte geführt werden, wobei ein Teil dieser weiteren Mehrzahl Nutzdaten führt und der verbleibende Teil dieser weiteren Mehrzahl für Ersatzschaltezwecke zur Verfügung steht
**dadurch gekennzeichnet,**
**daß** jeweils eine der Systemhälften sowie die jeweils zugeordneten peripheren Einrichtungen (LTG₁....LTGₙ) in einen definierten Anfangszustand versetzt werden,
**daß** daraufhin die von den Teilnehmeranschlußnetzen (AN₁..ANₖ) über die dieser Systemhälfte zugeordneten peripheren Einrichtungen geleiteten, Nutzdaten führenden Kommunikationskanäle (CC) ersatzgeschaltet werden auf die für Ersatzschaltezwecke zur Verfügung stehenden Kommunikationskanäle(CC) der der verbleibenden Systemhälfte zugeordneten peripheren Einrichtungen (LTG₁..LTGₙ) und
**daß** in die jeweils in den definierten Anfangszustand versetzte Systemhälfte sowie in die jeweils zugeordneten peripheren Einrichtungen (LTG₁...LTGₙ), welche keine Nutzdaten führenden Kommunikationskanäle (CC) mehr heranführen,Software geladen wird und nach Laden beider Systemhälften abschließend der redundante Betrieb wieder hergestellt wird.

2. Verfahren nach Anspruch 1,
**dadurch gekennzeichnet,**
**daß** das Herstellen des definierten Anfangszustandes der zuerst zu ladenden Systemhälfte und der ihr zugeordneten peripheren Einrichtungen (LTG₁.... LTGₙ) durch Ausdünnen des von den dieser Systemhälfte zugeordneten peripheren Einrichtungen zu bearbeitenden vermittlungstechnischen Verkehrs erfolgt,indem bestehende Verbindungen für die Dauer ihres Bestehens bearbeitet werden, während neue Verbindungswünsche abgewiesen werden, bis der durch ein bestimmtes Kriterium definierte Anfangszustand erreicht ist.

3. Verfahren nach Anspruch 2,
**dadurch gekennzeichnet,**
**daß** das bestimmte Kriterium das Erreichen einer vorgegebenen Zeitmarke oder gegebenenfalls eines Schwellenwertes ist.

4. Verfahren nach einem der Ansprüche 1 bis 3,
**dadurch gekennzeichnet,**
**daß** der definierte Anfangszustand der zuletzt zu ladenden Systemhälfte und der ihr zugeordneten peripheren Einrichtungen (LTG₁...LTGₙ) hergestellt wird, indem über diese Systemhälfte geleitete Verbindungen ohne vorheriges Ausdünnen des vermittlungstechnischen Verkehrs ausgelöst werden.

5. Verfahren nach Anspruch 4,
**dadurch gekennzeichnet,**
**daß** vor dem zur Erreichung des definierten Anfangszustands der zuletzt zu ladenden Systemhälfte und der ihr zugeordneten peripheren Einrichtungen (LTG₁...LTGₙ) vorgenommene Auslösen der über diese Systemhälfte geführten Verbindungen die über die dieser Systemhälfte zugeordneten peripheren Einrichtungen geführten Kommunikationskanäle (CC) unterbrochen werden und
**daß** die weitere Systemhälfte die Kommunikationskanäle (CC) nach Ersatzschalteanforderung seitens der Teilnehmeranschlußnetze (AN₁..ANₖ) auf die ihr zugeordneten peripheren Einrichtungen ersatzschaltet und die von dem Auslösen betroffenen Teilnehmer in den Teilnehmeranschlußnetzen (AN₁...ANₖ) in ihren Anfangszustand überführt.

6. Verfahren nach Anspruch 5
**dadurch gekennzeichnet,**
**daß** das Überführen der zuerst zu ladenden Systemhälfte und der ihr zugeordneten peripheren Einrichtungen (LTG₁....LTGₙ) in den bezüglich der Teilnehmeranschlußnetze (AN₁...ANₖ) vermittlungstechnisch aktiven Betriebszustand per Bedienereingabe möglich ist.

7. Verfahren nach Anspruch einem der vorstehenden Ansprüche
**dadurch gekennzeichnet,**
**daß** zum Wiederherstellen des redundanten Betriebes die zentralen Einrichtungen (SN1, MB1, CP1) der zuletzt geladenen Systemhälfte abgeschaltet und durch die Steuerung der weiteren Systemhälfte (CPO) wiederangeschaltet werden.

8. Verfahren nach nach einem der vorstehenden Ansprüche
**dadurch gekennzeichnet,**
**daß** die Ersatzschaltung der Nutzdaten führenden Kommunikationskanäle (CC) der definierten Schnittstellen, insbesondere der V5.2-Schnittstellen, auf die mit der neuen Software geladenen peripheren Einrichtungen und die Zuordnung der für die Bearbeitung der Nr.7 Signalisierung vorgesehenen Einrichtungen zu der zuerst mit der neuen Software geladenen Systemhälfte zeitgleich erfolgt.

9. Verfahren nach einem der vorstehenden Ansprüche,
**dadurch gekennzeichnet,**
**daß** die Ersatzschaltung der Nutzdaten führenden Kommunikationskanäle (CC) von der jeweils einen Systemhälfte zu der jeweils verbleibenden Systemhälfte durch wenigstens eine vorgeschaltete Cross-Connect Schaltvorrichtung erfolgt.

10. Verfahren nach einem der vorstehenden Ansprüche,
**dadurch gekennzeichnet,**
**daß** die Zuordnung von Kommunikationskanal zu peripherer Einrichtung sowie von peripherer Einrichtung zur Systemhälfte derart erfolgt, daß bei Ausfall aller der einen oder der verbleibenden Systemhälfte zugeordneten peripheren Einrichtungen alle hiervon betroffenen Nutzdaten führenden Kommunikationskanäle (CC) auf die verbleibenden peripheren Einrichtungen ersatzgeschaltet werden.

11. Verfahren nach einem der vorstehenden Ansprüche,
**dadurch gekennzeichnet,**
**daß** jede der definierten Schnittstellen, insbesondere der V5.2-Schnittstellen, der Teilnehmeranschlußnetze (AN₁...ANₖ) eine ungefähr gleiche Anzahl von Sprachkanälen an die beiden Gesamtheiten der den Systemhälften zugeordneten peripheren Einrichtungen heranführt.

## Claims

1. A method for loading software into a communication system with at least two pairs of central, redundantly configured, reciprocally assigned facilities (CPO, CP1; MB0, MB1; SN0, SN1), each defining a system-half (SN0, MB0, CP0) and a system-half configured in a redundant manner thereto (SN1, MB1, CP1),
with a plurality (n) of peripheral facilities (LTG₁, ..., LTGₙ) assigned to the one or the remaining system-half, being connected to each of the central, redundantly configured facilities (SN0, SN1; MB0, MB1) and being linked via defined interfaces, in particular V5.2 interfaces, to subscriber access networks (AN₁, ..., ANₖ),
with a further plurality of communication channels (CC) associated with said interfaces, between the subscriber access networks (AN₁, ..., ANₖ) and respectively assigned peripheral facilities (LTG₁, ..., LTGₙ) of the first or second system-half, with some of this further plurality carrying useful data and the remaining part of this further plurality being available for protection switching purposes,
**characterised in that**
in each instance one of the system-halves and the respectively assigned peripheral facilities (LTG₁, ..., LTGₙ) are switched to a defined initial state,
the communication channels (CC) carrying useful data and routed by the subscriber access networks (AN₁, ..., ANₖ) via the peripheral facilities assigned to this system-half are then switched for protection purposes to the communication channels (CC) of the peripheral facilities (LTG₁, ..., LTGₙ) assigned to the remaining system-half, which are available for protection switching purposes and
software is loaded into the system-half switched in each instance into the defined initial state and into the respectively assigned peripheral facilities (LTG₁, ..., LTGₙ), which no longer conduct communication channels (CC) carrying useful data and, after both system-halves have been loaded, redundant operation is finally restored.

2. The method according to claim 1,
**characterised in that**
the defined initial state of the system-half to be loaded first and the peripheral facilities (LTG₁, ..., LTGₙ) assigned to it is established by thinning out the switching-related traffic to be processed by the peripheral facilities assigned to this system-half, **in that** existing connections are processed for the duration of their existence, while new connection requests are rejected, until the initial state defined by a specific criterion is achieved.

3. The method according to claim 2,
**characterised in that**
the specific criterion is the achievement of a predetermined time mark or optionally a threshold value.

4. The method according to one of claims 1 to 3,
**characterised in that**
the defined initial state of the system-half to be loaded last and the peripheral facilities (LTG₁, ..., LTGₙ) assigned to it is established, **in that** connections routed via this system-half are cleared without prior thinning out of the switching-related traffic.

5. The method according to claim 4,
**characterised in that**
before the clearing of the connections routed via the system-half to be loaded last, as undertaken to achieve the defined initial state of said system-half to be loaded last and the peripheral facilities (LTG₁, ..., LTGₙ) assigned to it, the communication channels (CC) routed via the peripheral facilities assigned to said system-half are interrupted and the further system-half switches the communication channels (CC) for protection purposes, after the request for protection switching on the part of the subscriber access networks (AN₁, ..., ANₖ), to the peripheral facilities assigned to it and transfers the subscribers affected by the clearing operation in the subscriber access networks (AN₁, ..., ANₖ) to their initial state.

6. The method according to claim 5,
**characterised in that**
the transfer of the system-half to be loaded first and the peripheral facilities (LTG₁, ..., LTGₙ) assigned to it to the active operating state for switching purposes in respect of the subscriber access networks (AN₁, ..., ANₖ) is possible by means of operator input.

7. The method according to one of the preceding claims,
**characterised in that**
to restore redundant operation, the central facilities (SN1, MB1, CP1) of the last loaded system-half are deactivated and reactivated by the controller of the further system-half (CP0).

8. The method according to one of the preceding claims,
**characterised in that**
the communication channels (CC) of the defined interfaces carrying useful data, in particular the V5.2 interfaces, are switched for protection purposes to the peripheral facilities loaded with the new software and the facilities provided to process no. 7 signalling are assigned to the system-half first loaded with the new software simultaneously.

9. The method according to one of the preceding claims,
**characterised in that**
the communication channels (CC) carrying useful data are switched for protection purposes from the one system-half in each instance to the respectively remaining system-half by means of at least one pre-switched cross-connect switching device.

10. The method according to one of the preceding claims,
**characterised in that**
the assignment of communication channel to peripheral facility and of peripheral facility to system-half takes place such that if all the peripheral facilities assigned to the one or the remaining system-half should fail, all the communication channels (CC) carrying useful data and affected thereby are switched for protection purposes to the remaining peripheral facilities.

11. The method according to one of the preceding claims,
**characterised in that**
each of the defined interfaces, in particular the V5.2 interfaces, of the subscriber access networks (AN₁, ..., ANₖ) conducts an approximately equal number of voice channels to both totalities of the peripheral facilities assigned to the system-halves.

## Revendications

1. Procédé pour le chargement de software dans un système de communication comprenant au moins deux paires de dispositifs (CPO, CP1 ; MB0, MB1 ; SN0, SN1) centralisés, réciproquement attribués et redondants, qui définissent chacun une moitié de système (SN0, MB0, CP0) ainsi que la moitié de système (SN1, MB1, CP1) conçue de façon redondante par rapport à la première,
comprenant une pluralité (n) de dispositifs (LTG₁...LTGₙ) périphériques, attribués à une moitié de système ou à la moitié de système restante, lesquels sont reliés à chacun des dispositifs (SN0, SN1 ; MB0, MB1) centralisés conçus de façon redondante, et qui sont raccordés par des interfaces définies, en particulier des interfaces V5.2, à des réseaux de raccordement d'abonné (AN₁...ANₖ),
comprenant une autre pluralité de canaux de communication (CC) appartenant à ces interfaces, qui sont guidés entre les réseaux de raccordement d'abonné (AN₁...ANₖ) et des dispositifs (LTG₁...LTGₙ) périphériques respectivement attribués de la première moitié de système ou de la seconde moitié de système, une partie de cette autre pluralité guidant des données utiles et la partie restante de cette autre pluralité étant à disposition pour des opérations de commutation de remplacement,
**caractérisé en ce que**
respectivement une des moitiés de système et les dispositifs (LTG₁...LTGₙ) périphériques respectivement attribués sont amenés dans un état initial défini,
**en ce que** ensuite les canaux de communication (CC) véhiculant des données utiles et guidés depuis les réseaux de raccordement d'abonné (AN₁...ANₖ) par les dispositifs périphériques attribués à cette moitié de système font l'objet d'une commutation de remplacement sur les canaux de commutation (CC), mis à disposition pour des commutations de remplacement, des dispositifs (LTG₁...LTGₙ) périphériques attribués à la moitié de système restante et
**en ce que** le software est chargé dans la moitié de système respectivement mise dans l'état initial défini et dans les dispositifs (LTG₁...LTGₙ) périphériques respectivement attribués, qui n'amènent plus des canaux de communication (CC) véhiculant des données utiles et pour conclure, après le chargement des deux moitiés de système, l'exploitation redondante est à nouveau rétablie.

2. Procédé selon la revendication 1,
**caractérisé en ce que**
l'établissement de l'état initial défini de la moitié de système à charger en premier et des dispositifs (LTG₁...LTGₙ) périphériques qui lui sont attribués s'effectue par l'éclaircissement du trafic de commutation à traiter par les dispositifs périphériques attribués à cette moitié de système, du fait que des liaisons existantes sont traitées pour la durée de leur existence, alors que de nouveaux souhaits de liaison sont refusés jusqu'à ce que l'état initial défini par un critère donné soit atteint.

3. Procédé selon la revendication 2,
**caractérisé en ce que**
le critère donné est le fait d'atteindre un repère de temps prédéfini ou le cas échéant une valeur seuil.

4. Procédé selon l'une quelconque des revendications 1 à 3,
**caractérisé en ce que**
l'état initial défini de la moitié de système à charger en dernier et des dispositifs (LTG₁...LTGₙ) périphériques qui lui sont attribués est établi du fait que des liaisons guidées par cette moitié de système sont déclenchées sans éclaircissement préalable du trafic de commutation.

5. Procédé selon la revendication 4,
**caractérisé en ce que**
avant le déclenchement des liaisons guidées par cette moitié de système, qui est effectué pour atteindre l'état initial défini de la dernière moitié de système à charger et des dispositifs (LTG₁...LTGₙ) périphériques qui lui sont attribués, les canaux de communication (CC) guidés par les dispositifs périphériques attribués à cette moitié de système sont interrompus et **en ce que** l'autre moitié de système commute en remplacement les canaux de communication (CC) après la demande de commutation de remplacement de la part des réseaux de raccordement d'abonné (AN₁...ANₖ) sur les dispositifs périphériques qui lui sont attribués et transfère dans leur état initial les abonnés concernés par le déclenchement dans les réseaux de raccordement d'abonné (AN₁... ANₖ).

6. Procédé selon la revendication 5,
**caractérisé en ce que**
le transfert de la moitié de système à charger en premier et des dispositifs (LTG₁... LTGₙ) périphériques qui lui sont attribués dans l'état de service actif en commutation par rapport aux réseaux de raccordement d'abonné (AN₁...ANₖ) est possible par une entrée d'opérateur.

7. Procédé selon l'une quelconque des revendications précédentes,
**caractérisé en ce que**,
pour rétablir l'exploitation redondante, les dispositifs (SN1, SP1, CP1) centralisés de la moitié de système chargée en dernier sont déconnectés et sont reconnectés par la commande de l'autre moitié de système (CP).

8. Procédé selon l'une quelconque des revendications précédentes,
**caractérisé en ce que**
la commutation de remplacement des canaux de communication (CC) véhiculant des données utiles des interfaces définies, en particulier des interfaces V5.2, sur les dispositifs périphériques chargés avec le nouveau software et l'attribution des dispositifs, prévus pour le traitement de la signalisation numéro 7, à la moitié de système chargée d'abord avec le nouveau software, s'effectuent en même temps.

9. Procédé selon l'une quelconque des revendications précédentes,
**caractérisé en ce que**
la commutation de remplacement des canaux de communication (CC) véhiculant des données utiles d'une moitié de système respective à la moitié de système respectivement restante s'effectue par au moins un dispositif de commutation Cross-Connect raccordé en amont.

10. Procédé selon l'une quelconque des revendications précédentes,
**caractérisé en ce que**
l'attribution du canal de communication au dispositif périphérique et du dispositif périphérique à la moitié de système s'effectue de telle sorte que, en cas de défaillance de tous les dispositifs périphériques attribués à une moitié de système ou à la moitié de système restante, tous les canaux de communication (CC) véhiculant des données utiles concernées par cela font l'objet d'une commutation de remplacement sur les dispositifs périphériques restants.

11. Procédé selon l'une quelconque des revendications précédentes,
**caractérisé en ce que**
chacune des interfaces définies, en particulier des interfaces V5.2, des réseaux de raccordement d'abonné (AN₁...ANₖ) amène un nombre approximativement identique de canaux vocaux aux deux ensembles des dispositifs périphériques attribués aux moitiés de système.
